# EUROPÄISCHE PATENTSCHRIFT

(11) **EP 1 334 318 B1**
(45) Veröffentlichungstag und Bekanntmachung des Hinweises auf die Patenterteilung: **23.02.2005**
(21) Anmeldenummer: 01983578.4
(22) Anmeldetag: 02.11.2001
(51) Int. Cl.: F24H 1/18

(54) **LUFTHEIZUNG MIT BRENNSTOFFZELLEN**
AIR HEATER WITH FUEL CELLS
CHAUFFAGE D'AIR A PILES A COMBUSTIBLE

(30) Priorität: 15.11.2000 AT 192100
(43) Veröffentlichungstag der Anmeldung: 13.08.2003
(73) Patentinhaber: Vaillant GmbH, 42859 Remscheid (DE)
(72) Erfinder: BERG, Joachim, 42850 Remscheid (DE); AHLE, Manfred, 51688 Wipperfürth (DE)
(74) Vertreter: Hocker, Thomas
(86) Internationale Anmeldenummer: PCT/EP2001/012710
(87) Internationale Veröffentlichungsnummer: WO 2002/040927

(56) Entgegenhaltungen:
- EP-A- 0 445 510
- US-A- 4 638 943
- US-A- 5 985 474

## Beschreibung

Die Erfindung bezieht sich auf eine Heizeinrichtung gemäß dem Oberbegriff des unabhängigen Anspruches.

Bei z.B. aus der GB 2 122 737 A oder der US 4 638 943 A bekannten Heizeinrichtungen ist ein mit einem Brenner versehener Wasserheizer vorgesehen. Für Häuser mit höherem Wärmebedarf sind derartige Heizeinrichtungen gut geeignet, da bei einem ausreichend hohen Wärmebedarf die Modulation oder auch die Taktung des Wärmeerzeugers gering sein kann und keine zu hohen Start- bzw. Modulationsverluste auftreten.

Darüber hinaus ist aus der US 5 516 344 A1 ein Kessel mit einer Brennstoffzelle mit mindestens einem Wärmetauscher bekannt geworden.

Aus der US 5 985 474 A, die die Merkmale des Oberbegriffs von Anspruch 1 zeigt, ist bekannt, dass die Abwärme einer Brennstoffzelle in einem Warmwasserspeicher gespeichert werden kann und von dort zum Beheizen eines Hauses zur Verfügung steht.

Die US 4 638 943 A lehrt, dass eine Luftheizung ihre Wärme aus einem Warmwasserspeicher beziehen kann, wobei Luft in einem Luft-Wasser-Wärmeaustauscher, der von warmem Speicherwasser durchströmt wird, erhitzt wird.

Bei Passiv- oder Niedrigenergiehäusern ist jedoch nur ein geringer Wärmebedarf gegeben. Bei den oben erwähnten herkömmlichen Heizeinrichtungen ist daher eine sehr weitgehende Modulation der Wärmequelle bzw. deren häufige Taktung erforderlich. Dies führt einerseits zu entsprechend erhöhten Anfahrverlusten des Brenners und anderseits zu einem entsprechend erhöhten Schadstoffausstoß.

Ziel der Erfindung ist es, diese Nachteile zu vermeiden und eine Heizeinrichtung der eingangs erwähnten Art vorzuschlagen, die sich auch für Passiv- und Niedrigenergiehäuser gut eignet.

Erfindungsgemäß wird dies bei einer Heizeinrichtung der eingangs erwähnten Art durch die kennzeichnenden Merkmale des unabhängigen Anspruches erreicht.

Unter dem Begriff "Brennstoffzelle" ist dabei nicht bloß die eigentliche Brennstoffzelle, bzw. ein Brennstoffzellenstapel zu verstehen sondern diese, bzw. dieser samt den zugehörigen Zusatzeinrichtungen, wie Reformer, Kühlmedium-Wärmetauscher und ein Abgaswärmetauscher, sowie gegebenenfalls ein Abgas-Nachbrenner, der die im Abgas noch vorhandenen Reste von Wasserstoffgas verbrennt. Weiter umfaßt der Begriff "Brennstoffzelle'' auch noch eine Steuerung, zur Steuerung deren für den Betrieb der eigentlichen Brennstoffzelle erforderlichen Nebenaggregate.

Beim Betrieb von Brennstoffzellen fällt in der Regel etwa je die Hälfte der erzeugten, bzw. umgesetzten Energie als elektrische Energie und als Wärme an. Wird nun eine Brennstoffzelle für den zu erwartenden Strombedarf eines Hauses ausgelegt, so fällt bei deren Betrieb gleichzeitig ausreichend Wärme an, um ein Niedrigenergiehaus zu versorgen, insbesondere auch zur Bereitung von Warmwasser. Außerdem zeichnen sich Brennstoffzellen durch einen großen Modulationsbereich aus, wodurch eine entsprechend gute Anpassung an die jeweiligen Erfordernisse möglich ist.

Durch die vorgeschlagene Kombination von Brennstoffzelle, Warmwasserspeicher und von der Brennstoffzelle gespeiste elektrische Zusatzheizung kann sehr einfach und mit nur geringen Verlusten gerade soviel Wärme erzeugt werden als benötigt wird. Die Zusatzheizung dient dabei lediglich zur Erhöhung des Komforts für den Benutzer, insbesondere zur Ermöglichung einer raschen Aufheizung. In diesem Zusammenhang ist es vorteilhaft, dass die gesamte Wärmeenergie von der Heizeinrichtung bereitgestellt wird und zwar auch dann, wenn ein erhöhter Wärmebedarf vorliegt.

Durch die Merkmale des Anspruches 2 ergibt sich der Vorteil, daß die Brennstoffzelle im Wesentlichen in Abhängigkeit vom Wärmebedarf gesteuert wird.

Durch die Merkmale des Anspruches 3 ergibt sich der Vorteil, daß ein separater und vom Inhalt des Warmwasserspeichers getrennter Wärmeversorgungskreis für den Lufterhitzer gegeben ist.

Durch die Merkmale des Anspruches 4 ergibt sich der Vorteil relativ geringer Abstrahlungsverluste, wobei durch die Schichtung auch ein Zugriff auf Wasser in einem bestimmten Temperaturbereich möglich ist. Dabei kann z.B. vorgesehen sein, daß eine Brauchwasserleitung aus dem obersten und daher aus dem wärmsten Bereich des Warmwasserspeichers aus diesem wegführt und der Lufterhitzer, bzw. dessen Wärmetauscher aus einem tieferen und damit kühlerem Bereich des Warmwasserspeichers mit Heizwasser versorgt wird.

Die Erfindung wird nun anhand der Zeichnung näher erläutert. Dabei zeigen:
Fig. 1 schematisch eine erste Ausführungsform einer erfindungsgemäßen Heizeinrichtung, die prinzipiell in drei Zonen aufgeteilt ist und zwar:
   I: die Energieerzeugungszone,
   II: die Speicherzone und
   III: die Energieabgabezone
Fig. 2 schematisch Details zu einer weiteren Ausführungsform einer erfindungsgemäßen Heizeinrichtung, welche die Energieerzeugungszone betrifft,
Fig. 3 bis 5 Details von Ausführungsvarianten zu beiden Ausführungsformen in den Speicher- und Energieabgabezonen.

Gleiche Bezugszeichen bedeuten in allen Figuren gleiche Einzelteile.

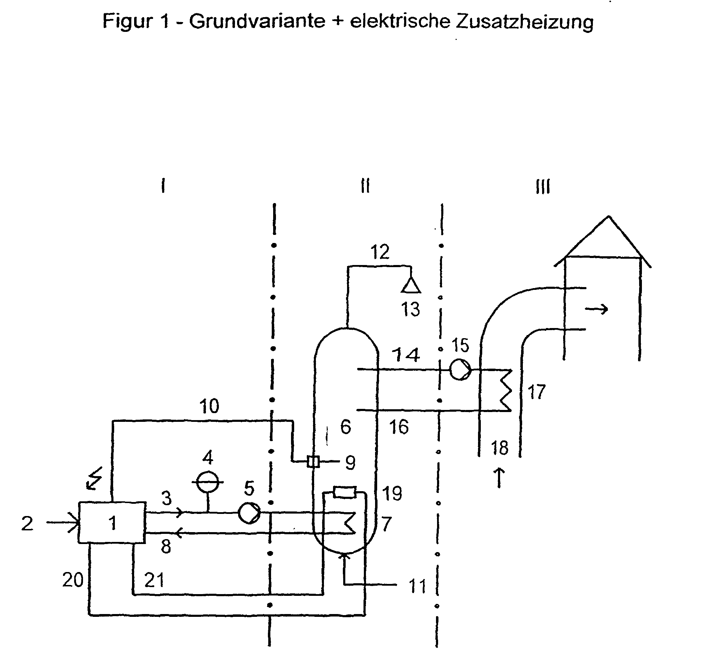

Die Heizeinrichtung nach der Fig. 1 weist eine Brennstoffzelle 1 auf, die über eine Leitung 2 mit Prozeßgas versorgt ist. Dabei ist unter dem Begriff "Brennstoffzelle", wie bereits erläutert, nicht bloß die eigentliche Brennstoffzelle, bzw. ein Brennstoffzellenstapel zu verstehen, sondern diese, bzw. dieser samt den zugehörigen Zusatzeinrichtungen, wie Reformer, Kühlmedium-Wärmetauscher, Abgaswärmetauscher, sowie gegebenenfalls ein Abgas-Nachbrenner, der die im Abgas noch vorhandenen Reste von Wasserstoffgas verbrennt.

Weiter umfaßt der Begriff "Brennstoffzellen" auch noch eine Steuerung, zur Steuerung der für den Betrieb der eigentlichen Brennstoffzelle erforderlichen Nebenaggregate.

An dem in der Brennstoffzelle 1 enthaltenen Wärmeübertragungssystem ist über eine Vorlaufleitung 3, an der ein Ausgleichsgefäß 4 angeschlossen ist und in der eine Umwälzpumpe 5 angeordnet ist, ein in einem Warmwasserspeicher 6 angeordneter Wärmetauscher 7 angeschlossen, der über eine Rücklaufleitung 8 mit dem in der Brennstoffzelle 1 integrierten Wärmeübertragungssystem verbunden ist.

Im Warmwasserspeicher 6 ist ein Temperaturfühler 9 angeordnet, der über eine Signalleitung 10 mit der in der Brennstoffzelle 1 integrierten Steuerung verbunden ist.

In den Warmwasserspeicher 6 mündet eine Kaltwasserzuleitung 11 in dessen untersten Bereich und aus dem obersten Bereich des Warmwasserspeichers 6 führt eine Brauchwasserleitung 12 weg, die zu mindestens einer Zapfstelle 13 führt.

Weiter sind an den Warmwasserspeicher 6 eine Heizungs-Vorlaufleitung 14, in der eine Umwälzpumpe 15 angeordnet ist, und eine Heizungsrücklaufleitung 16 angeschlossen, wobei diese Leitungen 14, 6 in unterschiedlichen Höhen aus dem Warmwasserspeicher 6 wegführen, bzw. in diesen münden.

An die Heizungs-Vorlauf- und -rücklaufleitung 14, 16 ist ein Heizungs-Wärmetauscher 17 angeschlossen, der in einer Luftheizung 18 angeordnet ist.

Weiter ist in dem Warmwasserspeicher 6 noch eine elektrische Zusatzheizung 19 angeordnet, 19, die über Anschlußleitungen 20, 21 mit der Brennstoffzelle 1 verbunden ist und von dieser im Bedarfsfall, z.B. bei einer Schnellaufheizung, mit elektrischer Energie versorgbar ist.

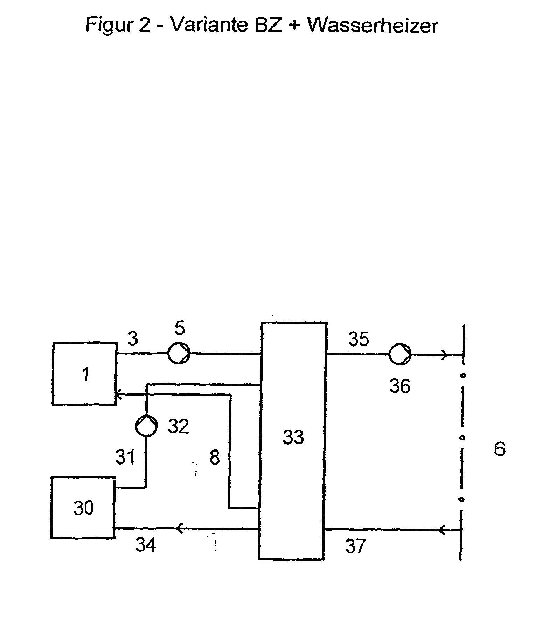

Die Ausführungsform nach der Fig. 2 unterscheidet sich von jener nach der Fig. 1 dadurch, daß als Zusatzheizung ein Wasserheizer 30 oder Kessel vorgesehen ist. Dabei mündet die Vorlaufleitung 3 der Brennstoffzelle 1 ebenso wie die Zusatz-Vorlaufleitung 31 des Wasserheizers 30 oder Kessels in einen offenen Verteiler 33, wobei in der Zusatz-Vorlaufleitung 31 eine Umwälzpumpe 32 angeordnet ist.

Der Verteiler 33 ist über die Rücklaufleitung 8 mit der Brennstoffzelle 1 und über die Zusatz-Rücklaufleitung 34 mit dem Wasserheizer 30 verbunden.

Der Verteiler 33 ist über eine Verteiler-Vorlaufleitung 35, in der eine Umwälzpumpe 36 angeordnet ist und über eine Verteiler-Rücklaufleitung 36 mit dem Warmwasserspeicher 6 verbunden.

### Der übrige Aufbau der Heizeinrichtung ist weitestgehend gleich jenem nach der Fig. 1

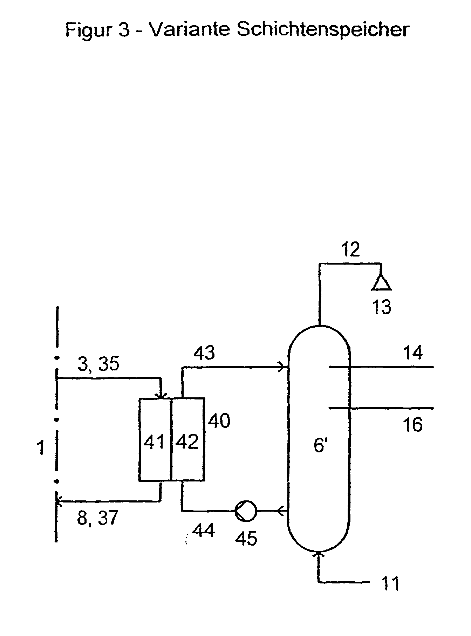

Die Fig. 3 zeigt ein Detail einer Ausführungsvariante, die für beide Ausführungsformen nach den Fig. 1 und 2 möglich ist. Nach dieser Ausführungsvariante ist ein Speicher-Wärmetauscher 40 vorgesehen, dessen Primärzweig 1 über eine Vorlaufleitung 3 oder 35 und eine Rücklaufleitung 8 oder 37 mit der Brennstoffzelle 1 oder dem offenen Verteiler 33 verbunden ist. Der Sekundärzweig 42 dieses Wärmetauschers 40 ist über eine Speicher-Vorlaufleitung 43, die in den obersten Bereich des als Schichtenspeicher ausgebildeten Warmwasserspeichers 6' mündet, und eine Speicher-Rücklaufleitung 44, die aus dem untersten Bereich des Warmwasserspeichers 6' wegführt und in der eine Umwälzpumpe 45 angeordnet ist, mit dem Warmwasserspeicher 6' verbunden.

Der übrige Aufbau ist dabei gleich jenem nach der Fig. 1 oder 2.

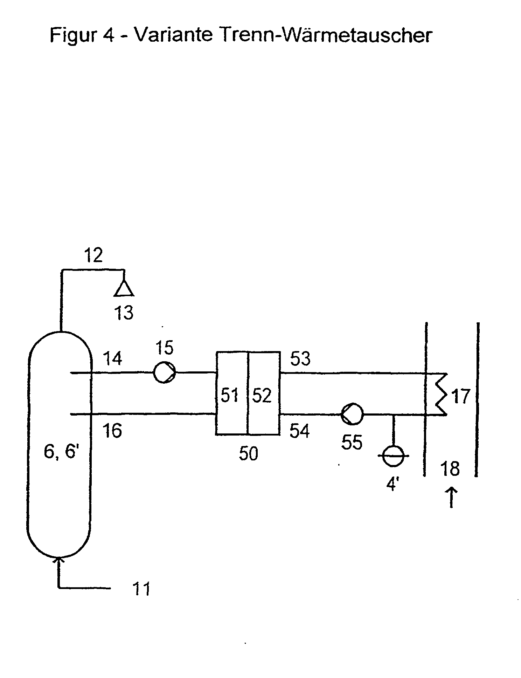

Die Fig. 4 zeigt eine Ausführungsvariante, die bei den Ausführungsformen nach den Fig. 1 und 2, mit oder ohne der Ausführungsvariante nach der Fig. 3 vorgesehen werden kann.

Nach der Ausführungsvariante nach der Fig. 4 ist zwischen dem Warmwasserspeicher 6, 6' und dem Luftheizer 18, bzw. dessen Wärmetauscher 17 ein Übertragungs-Wärmetauscher 50 vorgesehen, dessen Primärzweig 51 über die Heizungs-Vorlauf- und -rücklaufleitung 14, 16 an den Warmwasserspeicher 6, 6' angeschlossen ist und dessen Sekundärzweig 52 über eine Vorlaufleitung 53 und eine Rücklaufleitung 54, an der ein Ausgleichsgefäß 4' angeschlossen und in der eine Umwälzpumpe 55 angeordnet ist, mit dem Wärmetauscher 17 der Luftheizung 18 verbunden ist.

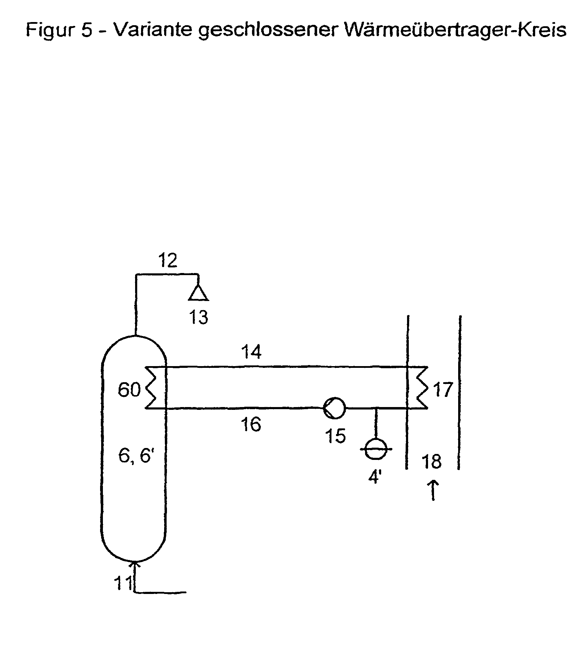

Statt der Ausführungsvariante nach der Fig. 4 kann auch die Ausführungsvariante nach der Fig. 5 vorgesehen sein, die ebenfalls bei den Ausführungsformen nach der Fig. 1 oder 2 mit oder ohne der Ausführungsvariante nach der Fig. 3 angewandt werden kann.

Bei der Ausführungsvariante nach der Fig. 5 ist im oberen Bereich des Warmwasserspeichers 6, 6' ein Wärmetauscher 60 vorgesehen, der über eine Heizungs-Vorlaufleitung 14 und eine Heizungs-Rücklaufleitung 16 mit dem Wärmetauscher 17 der Luftheizung 18 verbunden ist, wodurch ein geschlossener Wärmeträgerkreis gegeben ist. Dabei ist an die Rücklaufleitung 16, in der die Umwälzpumpe 15 angeordnet ist, ein Ausgleichsgefäß 4' angeschlossen.

Im Betrieb setzt die Brennstoffzelle das Wasserstoffgas enthaltende Prozeßgas um, wodurch elektrische Energie erzeugt wird und gleichzeitig Wärme anfällt. Diese wird über einen in der Brennstoffzelle 1 integrierten Abgas-Wärmetauscher und dem mit diesem verbundenen Wärmetauscher 7 oder über den Speicher-Wärmetauscher 40 dem Warmwasserspeicher 6, 6' zugeführt und heizt dessen Inhalt auf.

Die Steuerung der Brennstoffzelle 1 erfolgt dabei in Abhängigkeit von der Temperatur des Speicherinhaltes, die mit dem Temperaturfühler 9 erfaßt wird.

Aus dem Warmwasserspeicher 6. 6' kann über die Brauchwasserleitung 12 Warmwasser entnommen werden, wobei im Falle einer Zapfung Kaltwasser über den Kaltwasserzulauf 11 in den untersten Bereich des Warmwasserspeichers 6, 6' nachströmt.

Bei Vorliegen eines Wärmebedarfs für die Raumheizung eines Hauses, wird durch Starten der Umwälzpumpe 15 oder 36 und gegebenenfalls 55 warmes Wasser entweder direkt oder über den Übertragungs-Wärmetauscher 50 dem Wärmetauscher 17 der Luftheizung zugeführt, welcher letztere von Luft durchströmt wird, die dem zu beheizenden Haus zugeleitet wird.

Im Normalfall reicht bei Niedrigenergiehäusern die beim Betrieb der Brennstoffzelle 1, die für deren Bedarf an elektrischer Energie ausgelegt ist, anfallende Wärme, um den Wärmebedarf des Hauses zu decken. In Extremfällen oder um eine Schnellaufheizung, z.B. nach längerer Abwesenheit der Benutzer, zu ermöglichen, durchführen zu können, kann die Zusatzheizung in Betrieb genommen werden. Diese kann entweder, wie dies bei der Ausführungsform nach der Fig. 1 der Fall ist, elektrisch betrieben werden, wobei die Brennstoffzelle 1 die elektrische Energie liefern kann, oder durch einen mit einem Brenner betriebenen Wasserheizer oder Kessels gebildet sein (Fig. 2).

Im zweiten Fall liefert die Brennstoffzelle 1 und der Wasserheizer 30 parallel warmes Wasser zum offenen Verteiler 33, von dem es mittels der Umwälzpumpe 36 zum Warmwasserspeicher 6, 6' gefördert wird.

## Patentansprüche

1. Heizeinrichtung mit einem Warmwasserspeicher (6, 6'), bei der die Heizeinrichtung eine Brennstoffzelle (1) umfaßt, die Kühlmedium- und / oder abgasseitig einen den Warmwasserspeicher (6, 6') beaufschlagenden Wärmetauscher aufweist, **dadurch gekennzeichnet,** die Heizeinrichtunge eine vom Warmwasserspeicher beaufschlagte Luftheizung (18) umfaßt und dass eine elektrische Zusatzheizung (19), welche von der Brennstoffzelle (1) gespeist wird und vorzugsweise im Warmwasserspeicher (6) angeordnet ist, zur Beaufschlagung des Warmwasserspeichers (6, 6') vorgesehen ist.

2. Heizeinrichtung nach Anspruch 1, **dadurch gekennzeichnet, dass** eine die Brennstoffzelle (1) steuernde Steuerung vorgesehen, oder in diese integriert ist, an die ein die Temperatur im Warmwasserspeicher (6, 6') erfassender Fühler (9) angeschlossen ist, wobei die Temperatur im Warmwasserspeicher (6, 6') als Führungsgröße dient.

3. Heizeinrichtung nach einem der Ansprüche 1 bis 2, **dadurch gekennzeichnet, dass** im Warmwasserspeicher (6, 6') ein mit der Luftheizung (18) über eine Umwälzpumpe (15) in Verbindung stehender Wärmetauscher (60) angeordnet ist.

4. Heizeinrichtung nach einem der Ansprüche 1 bis 3, **dadurch gekennzeichnet, dass** der Warmwasserspeicher (6') als Schichtenspeicher ausgebildet ist und die Luftheizung (18) über zwei in unterschiedlicher Höhe aus dem Warmwasserspeicher (6') herausführende, bzw. in diesen mündende Leitungen (14, 16) mit der Luftheizung (18) unter Zwischenschaltung einer Umwälzpumpe (15) verbunden ist.

## Claims

1. A heating arrangement with a hot water tank (6, 6'), such heating arrangement comprising a fuel cell (1) having on the cooling medium side and/or the waste gas side a heat exchanger heating the hot water tank (6, 6'), **characterised in that** the heating arrangement comprises an air heater (18) supplied with heat from the hot water tank, and that a supplementary electric heater (19), which is supplied with heat from the fuel cell (1) and is preferably located inside the hot water tank (6), is provided for heating the hot water tank (6, 6').

2. A heating arrangement as claimed in Claim 1 **characterised in that** a controlling means controlling the fuel cell (1) is provided, or integrated in the latter, to which a sensor (9) sensing the temperature in the hot water tank (6, 6') is connected, with the temperature in the hot water tank (6, 6') serving as a reference variable.

3. A heating arrangement as claimed in Claim 1 or 2 **characterised in that** a heat exchanger (60) connected with the air heater (18) via a circulating pump (15) is arranged in the hot water tank (6, 6').

4. A heating arrangement as claimed in any of Claims 1 to 3 **characterised in that** the hot water tank (6') is designed as a multi-layer storage tank and the air heater (18) is connected with the air heater (18) via two lines (14, 16) leading out of the hot water tank (6'), or into the latter, respectively, at two different height levels, with a circulating pump (15) being interposed in the circuit.

## Revendications

1. Système de chauffage avec un accumulateur d'eau chaude (6, 6') et comprenant une pile à combustible (1) qui, du côté refroidissement et/ou échappement, comporte un échangeur de chaleur qui alimente l'accumulateur (6, 6'), système **caractérisé par le fait qu'**il comprend un ensemble de chauffage d'air (18) alimenté par l'accumulateur d'eau chaude et qu'il est prévu un ensemble de chauffage complémentaire électrique (19) alimenté par la pile à combustible (1) et placé de préférence dans l'accumulateur (6) et prévu pour alimenter l'accumulateur (6, 6').

2. Système de chauffage suivant la revendication 1, **caractérisé par le fait qu'**il est prévu un actionneur réglant la pile à combustible (1) ou intégré dans cette pile, et où est connectée une sonde (9) mesurant la température dans l'accumulateur (6, 6'), température servant de grandeur pilote.

3. Système de chauffage suivant l'une des revendications 1 ou 2, **caractérisé par le fait qu'**il est prévu dans l'accumulateur (6, 6') un échangeur de chaleur (60) relié à l'ensemble de chauffage d'air (18) par l'intermédiaire d' une pompe de circulation (15).

4. Système de chauffage suivant l'une des revendications 1 à 3, **caractérisé par le fait que** l'accumulateur d'eau chaude (6') est un accumulateur en couches qui est relié par deux conduites (14, 16) sortant à des niveaux différents de l'accumulateur (6') ou y pénétrant, à l'ensemble de chauffage d'air (18) par l'intermédiaire d'une pompe de circulation (15).
